# EUROPEAN PATENT APPLICATION

(11) **EP 3 361 334 A1**
(43) Date of publication of application: **15.08.2018**
(21) Application number: 17202966.2
(22) Date of filing: 22.11.2017
(51) Int. Cl.: G05B 19/05

(54) **MONITORING METHOD, MONITORING MODULE, AND MOBILE TERMINAL FOR MONITORING A PROGRAMMABLE LOGIC CONTROLLER**

(30) Priority: 13.02.2017 CN 201710075917
(71) Applicant: Omron Corporation, Kyoto-shi, Kyoto 600-8530 (JP)
(72) Inventor: YU, Hai bin, Shanghai 201206 (CN); DUAN, Liang Yong, Shanghai 201206 (CN); ZHANG, Hao, Shanghai 201206 (CN); XU, Jie, Shanghai 201206 (CN)
(74) Representative: Becker Kurig Straus

(57) **Abstract**

The embodiments of the invention provide a monitoring method, a monitoring module (61), and a mobile terminal (41) for monitoring a programmable logic controller (PLC) (42) connected with one or more monitor targets (43). The mobile terminal (41) is connected with the PLC (42), receives selection information input by a user for selecting a target component for the monitor target (43) from a target component list, determines the target component based on the selection information, and associates the target component and the corresponding monitor target (43) based on first input information input by the user. In an aspect, the mobile terminal (41) receives data about the monitor target (43) transmitted by the PLC (42), and the corresponding monitor target (43) displays a status of the monitor target (43) based on the data. In another aspect, the user is able to control the PLC (42) through the mobile terminal (41).

## Description

### BACKGROUND OF THE INVENTION

### 1. Field of the Invention

The invention relates to a programmable logic controller (PLC), and particularly relates to a monitoring method, a monitoring module, and a mobile terminal for monitoring a programmable logic controller.

### 2. Description of Related Art

In industrial manufacture, programmable logic controllers (PLC) are broadly applied to exert control during industrial manufacturing processes. For example, in a control system of a manufacturing device, components connected to the manufacturing device, such as a switch or a lamp, may be automatically controlled through the PLC. To ensure smooth industrial manufacture, the user needs to monitor and maintain the control data of the PLC.

Currently, the control data of the PLC may be monitored through an application (abbreviated as app) installed in a mobile phone. However, currently, a PLC component (i.e., a monitor target) monitored by the app is already set when the app is developed. If the user wishes to monitor a different PLC component, the manufacturer of the PLC needs to provide a different app. When the target that the user needs to monitor is not within a limited list provided by the manufacturer, the user is unable monitor via the PLC by using the app.

It should be noted that the introduction to the technical background is only provided to more clearly and comprehensively describe the technical solution of the invention and facilitate the understanding of people skilled in the art. The above technical solutions shall not be considered as well-known to people skilled in the art simply because the technical solutions are described in the section of Description of Related Art of the invention.

### SUMMARY OF THE INVENTION

To solve the issue indicated above. The embodiments of the invention provide a monitoring method, a monitoring module, and a mobile terminal for monitoring a programmable logic controller (PLC) capable of making a user's operation more flexible and facilitating the user's working efficiency and experience.

According to a first aspect of the embodiments of the invention, a monitoring method for monitoring a programmable logic controller is provided. The programmable logic controller is connected with one or more monitor targets. The method includes the following: connecting a mobile terminal with the programmable logic controller; receiving selection information by the mobile terminal, wherein the selection information is input by a user to select a target component for the monitor target from a target component list, and determining the target component based on the selection information; associating the target component and the corresponding monitor target by the mobile terminal based on first input information input by the user; and receiving data about the monitor target by the mobile terminal, wherein the data about the monitor target is transmitted by the programmable logic controller, and the target component displays a status of the monitor target based on the data.

According to a second aspect of the embodiments of the invention, the monitoring method according to the first aspect is provided, and the method further includes the following: receiving second input information by the mobile terminal, wherein the second input information is input by the user for the target component; and transmitting a control command to the programmable logic controller based on the second input information, such that the programmable logic controller exerts control on the monitor target based on the second input information.

According to a third aspect of the embodiments of the invention, the monitoring method according to the first aspect is provided, and the method further includes the following: storing in advance the target component list in the mobile terminal.

According to a fourth aspect of the embodiments of the invention, the monitoring method according to the first aspect is provided. In addition, the mobile terminal creates one or more pages based on third input information input by the user, and the mobile terminal determines the target component based on the selection information in each of the pages.

According to a fifth aspect of the embodiments of the invention, the monitoring method according to the first aspect is provided. In addition, the mobile terminal edits property information of the target component based on the first input information.

According to a sixth aspect of the embodiments of the invention, a monitoring module for monitoring a programmable logic controller. The programmable logic controller is connected with one or more monitor targets, and the monitoring module is disposed in a mobile terminal. In addition, the monitoring module includes the following: a communicator, connected with the programmable logic controller and receiving data about the monitor target transmitted by the programmable logic controller; a selector, determining a target component based on selection information input by a user for selecting the target component for the monitor target from a target component list; an editor, associating the target component and the corresponding monitor target based on first input information input by the user; and a displayer, making the target component display a status of the monitor target based on the data received by the communicator.

According to a seventh aspect of the embodiments of the invention, the monitoring module according to the sixth aspect is provided. In addition, the communicator transmits a control command to the programmable logic controller based on second input information input by the user for the target component, such that the programmable logic controller exerts control on the monitor target based on the second input information.

According to an eighth aspect of the embodiments of the invention, the monitoring module according to the sixth aspect is provided. In addition, the monitoring module further includes a storage storing in advance the target component list.

According to a ninth aspect of the embodiments of the invention, the monitoring module according to the sixth aspect is provided. In addition, the displayer creates one or more pages based on third input information input by the user, and the selector determines the target component based on the selection information in each of the pages.

According to a tenth aspect of the embodiments of the invention, the monitoring module according to the sixth aspect is provided. In addition, the editor edits property information of the target component based on the first input information.

According to an eleventh aspect of the embodiments of the invention, a mobile terminal is provided. The mobile terminal includes the monitoring module according to any one of the sixth to tenth embodiments for monitoring the programmable logic controller.

The embodiments of the invention include advantageous effects as follows. The monitoring method, the monitoring module, and the mobile terminal according to the embodiments of the invention are capable of making the user's operation more flexible and facilitating the user's working efficiency and experience.

Specific embodiments of the invention are disclosed in detail with reference to the following descriptions and the accompanying drawings. The descriptions clearly describe examples in which the principle of the invention is applicable. However, it should be understood that the scope of the embodiments of the invention shall not be limited thereto. The embodiments of the invention may cover various modifications, changes, and equivalents without departing from the spirit and terms of the annexed claims.

The description(s) for an embodiment and/or a disclosed feature(s) may be applied in one or more embodiments in an identical or similar way, combined with a feature in another embodiment, or replace a feature in another embodiment.

It should be noted that, throughout the text, terms such as "comprise/include" refer to the presence of a feature, an assembly, a step, or a component, but do not exclude the presence or addition of another feature, another assembly, another step or another component.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic view illustrating a monitoring method for monitoring a programmable logic controller according to Embodiment 1 of the invention.
FIG. 2 is another schematic view illustrating the monitoring method for monitoring the programmable logic controller according to Embodiment 1 of the invention.
FIG. 3 is another schematic view illustrating the monitoring method for monitoring the programmable logic controller according to Embodiment 1 of the invention.
FIG. 4 is a schematic view illustrating a connection among a mobile terminal, a programmable logic controller, and a monitor target according to Embodiment 1 of the invention.
FIG. 5 is a schematic view illustrating creating a new monitor frame as displayed on the mobile terminal according to Embodiment 1 of the invention.
FIG. 6 is a schematic view illustrating entering a new monitor frame as displayed on the mobile terminal according to Embodiment 1 of the invention.
FIG. 7 is a schematic view illustrating a target component list displayed on the mobile terminal according to Embodiment 1 of the invention.
FIG. 8 is a schematic view illustrating selecting a target component as displayed on the mobile terminal according to Embodiment 1 of the invention.
FIG. 9 is a schematic view illustrating dragging a target component as displayed on the mobile terminal according to Embodiment 1 of the invention.
FIG. 10 is a schematic view illustrating deleting a target component as displayed on the mobile terminal according to Embodiment 1 of the invention.
FIG. 11 is a schematic view illustrating editing a target component as displayed on the mobile terminal according to Embodiment 1 of the invention.
FIG. 12 is a schematic view illustrating a plurality of frames displayed on the mobile terminal according to Embodiment 1 of the invention.
FIG. 13 is a schematic view illustrating a monitoring module for monitoring a programmable logic controller according to Embodiment 2 of the invention.
FIG. 14 is a schematic view illustrating a system configuration of a mobile terminal for monitoring a programmable logic controller according to Embodiment 3 of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

Through the description of the specification, the foregoing and other features of the invention will become clear with reference to the accompanying drawings. The embodiments of the invention are specifically described in the specification and drawings, and such embodiments cover some of the embodiments adopting the principle of the invention. However, it shall be understood that the invention is not limited to the embodiments described herein. Instead, the invention covers all of the modifications, variations, and equivalents falling within the scope of the annexed claims.

### Embodiment 1

The embodiment provides a monitoring method for monitoring a programmable logic controller (PLC). In addition, the PLC is connected with one or more monitor targets.

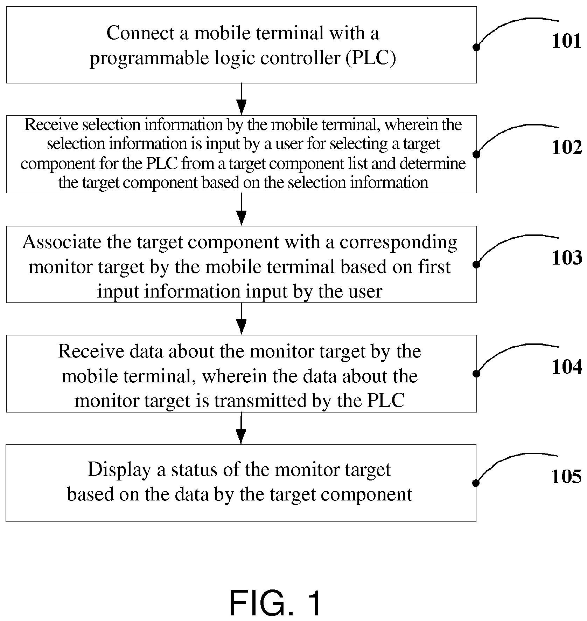

FIG. 1 is a flowchart illustrating the monitoring method for monitoring the PLC according to the embodiment of the invention, in which schematic descriptions of the method are made. As shown in FIG. 1, the method includes:
Step 101: The mobile terminal is connected with the PLC;
Step 102: The mobile terminal receives selection information for selecting a target component for the PLC from a target component list input by the user and determines the target component based on the selection information;
Step 103: The mobile terminal associates the target component and the corresponding monitor target based on first input information input by the user;
Step 104: The mobile terminal receives data about the monitor target transmitted by the PLC; and
Step 105: The target component displays a status of the corresponding monitor target based on the data.

At Step 104, the data about the monitor target transmitted by the PLC may include a PLC input and/or output data and/or intermediate data. The intermediate data may include a value of a data storage region, a value of a working region, a value of a counter, and/or a status value of the PLC, etc.

In the embodiment, the monitoring method may also be carried out by operating a monitoring module (also referred to as an apparatus or a virtual apparatus) monitoring the PLC in the mobile terminal. As examples, the module may be an application operated in a cell phone based on the Android system (also referred to as an Android app) or an application operated in a mobile operating system developed by Apple Inc. (also referred to as IOS app). Nevertheless, the invention is not limited thereto. The module may also be an app operated in other mobile terminals based on other operating systems, for example.

Besides, the mobile terminal may communicate with the PLC through a wired or wireless connection, such as communicating with the PLC via wireless fidelity (WiFi), Bluetooth, or universal serial bus (USB) connection.

According to the method of the embodiment, the user may flexibly choose the target component based on the actual situation. Thus, the operation of the user becomes more flexible, and the working efficiency and user experience are also facilitated.

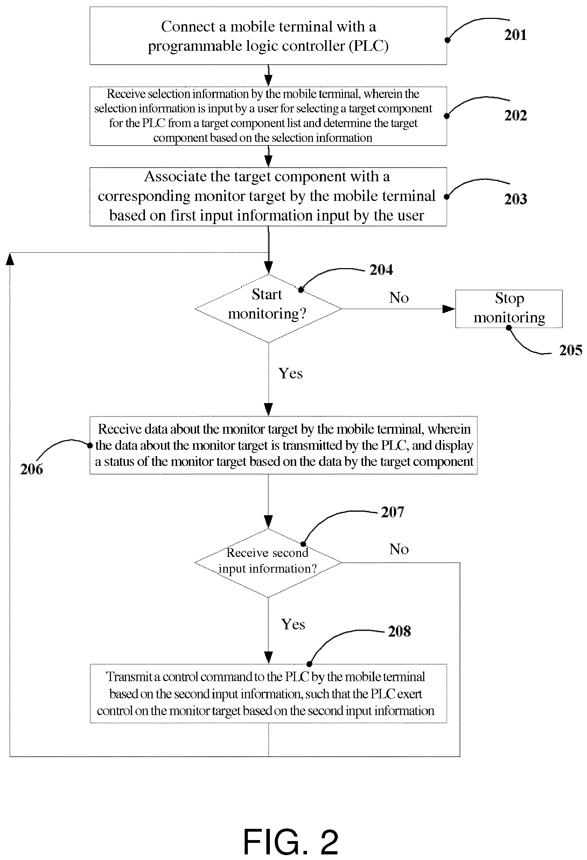

FIG. 2 is another schematic view illustrating a monitoring method for monitoring a programmable logic controller according to an embodiment of the invention. As shown in FIG. 2, the method includes:
Step 201: The mobile terminal is connected with the PLC;
Step 202: The mobile terminal receives selection information for selecting a target component for the PLC from a target component list input by the user and determines the target component based on the selection information;
Step 203: The mobile terminal associates the target component and the corresponding monitor target based on first input information input by the user;
Step 204: The mobile terminal determines whether to start monitoring, wherein if the mobile terminal determines not to start monitoring, Step S205 is performed, and if the mobile terminal determines to start monitoring, Step S206 is performed;
Step 205: The mobile terminal stops monitoring the PLC;
Step 206: The mobile terminal receives the data about the monitor target transmitted by the PLC, and the target component displays a status of the monitor target based on the data;
Step 207: The mobile terminal determines whether second input information about the target component input by the user is received, wherein if the second input information is not received, Step 204 is performed again, and if the second input information is received, Step 208 is performed; and
Step 208: The mobile terminal transmits a control command to the PLC based on the second input information, such that the PLC exerts control on the monitor target based on the second input information.

In the embodiment, the user may input the second input information about the target component, such as a switch, a numerical value input, a text input, or the like. The second input information may be a signal or setting information of a current value of the target component. Besides, at Step S203, the target component at the mobile terminal side is associated with the monitor target at the corresponding PLC side. Thus, a control command may be transmitted to the PLC by changing an ON/OFF state or the current value of the target component. Accordingly, the PLC may control the signal or the setting value of the corresponding monitor target based on the ON/OFF state or the setting information of the current value of the target component.

Accordingly, the user is not only able to monitor the statuses of respective PLC components, but is also able to flexibly set signals or setting values of the PLC for the respective PLC components based on the actual situation. Hence, the management and maintenance convenience is facilitated, and the working efficiency is also increased.

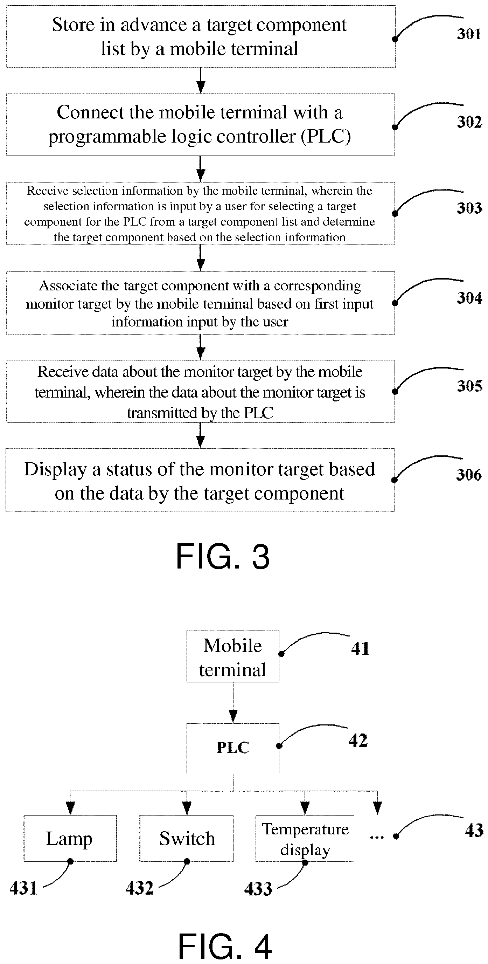

FIG. 3 is another schematic view illustrating a monitoring method for monitoring a programmable logic controller according to an embodiment of the invention. As shown in FIG. 3, the method includes:
Step 301: The mobile terminal stores in advance a target component list;
Step 302: The mobile terminal is connected with the PLC;
Step 303: The mobile terminal receives selection information for selecting a target component for the PLC from a target component list input by the user and determines the target component based on the selection information;
Step 304: The mobile terminal associates the target component and the corresponding monitor target based on first input information input by the user;
Step 305: The mobile terminal receives data about the monitor target transmitted by the PLC; and
Step 306: The target component displays a status of the monitor target based on the data.

At Step 301, the mobile terminal stores in advance the target component list. Based on the monitor targets connected to the PLC, the user may freely select a PLC target component to be monitored from the target component list. Hence, the user is able to choose a suitable type of target component from a variety of components and is also able to monitor a plurality of types of PLCs to make the operation more flexible.

In the embodiment, the mobile terminal may create one or more pages based on third input information input by the user. In addition, on each page, one or more target components are determined based on the target component selection information input by the user. The user may instruct the mobile terminal to create one or more monitor pages, and the number of monitor pages may be arbitrarily added or deleted by the user. Meanwhile, the user may also arbitrarily add or delete the target component in each of the monitor pages. Hence, in a case when a greater number of target components need to be monitored, or the target components need to be categorized and displayed, the monitor frame may be displayed in a clear and comprehensive manner.

In the embodiment, the mobile terminal may edit property information of the target component based on the first input information input by the user. The property information of the target component may include a variety of information such as data address information of the target component and a displayed location and a displayed name of the target component on a display of the mobile terminal. Therefore, the user may edit the property information of the target component based on needs and thus associate the target component with the corresponding PLC monitor target. Moreover, as the format of the monitor frame can be edited, contents as desired are able to be clearly displayed in a frame.

In the following, the monitoring method for monitoring the PLC by the mobile terminal is described with reference to FIGs. 4-12.

FIG. 4 is a schematic view illustrating a connection among the mobile terminal, the PLC, and the monitor target. As shown in FIG. 4, a mobile terminal 41 is connected with a programmable logic controller (PLC) 42. In addition, the PLC 42 is connected with one or more monitor targets 43. The monitor targets 43 may include one or more PLC components such as a lamp 431, a switch 432, a temperature display 433, and/or the like.

Moreover, a monitoring module (not shown) having a monitoring function is operated in the mobile terminal 41, and the PLC 42 is monitored by the mobile terminal 41 through the monitoring module. The monitoring module, as described above, may be a specialized app operated in the mobile terminal 41. The mobile terminal 41 monitors data of the PLC 42 about each monitor target 43 through the monitoring module.

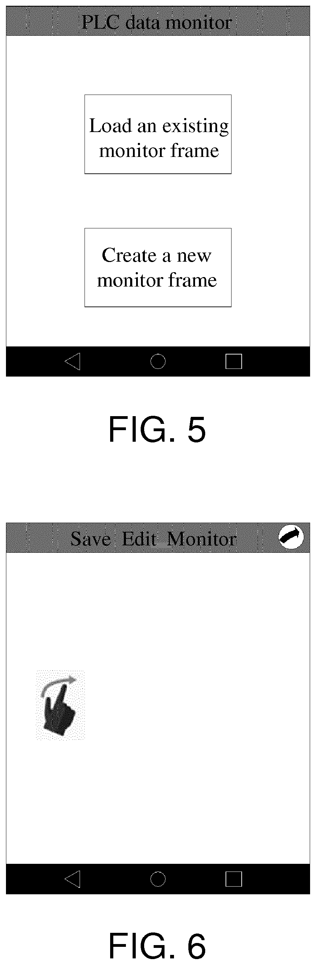

In the following, taking FIG. 5 to FIG. 12 as an example, the display screen of the mobile terminal is exemplarily illustrated with reference to FIG. 4.

FIG. 5 is a schematic view illustrating creating a new monitor frame as displayed on the mobile terminal according to an embodiment of the invention. As shown in FIG. 5, after entering the module, a screen of the mobile terminal 41 may display "load an existing monitor frame" and "create a new monitor frame". By clicking the "load an existing monitor frame" button, the user may load a previously saved monitor frame to the monitoring module, and by clicking the "create a new monitor frame" button, the user may enter an interface for creating a new monitor frame.

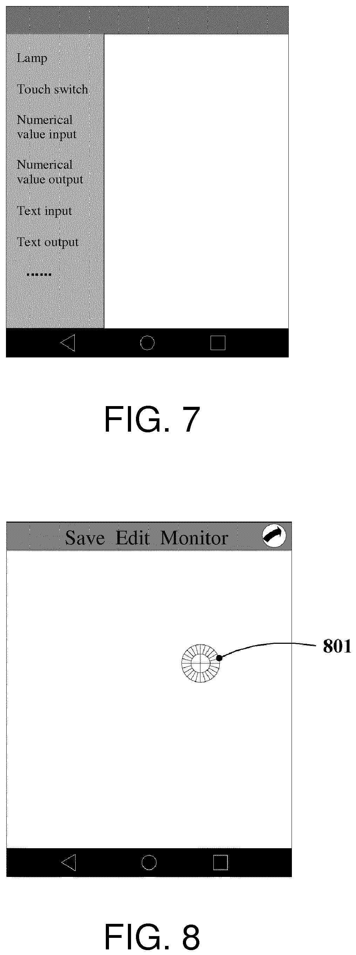

FIG. 6 is a schematic view illustrating entering a new monitor frame as displayed on the mobile terminal according to an embodiment of the invention. FIG. 7 is a schematic view illustrating a target component list displayed on the mobile terminal according to an embodiment of the invention. As shown in FIGs. 6 and 7, by carrying out a predetermined gesture operation, such as a rightward slide, on the interface for creating a new monitor frame, contents of the component list stored in advance may be displayed. The target component list may include target components such as a lamp, a touch switch, a numerical value input, a numerical value output, a text input, a text output, and the like.

FIG. 8 is a schematic view illustrating selecting a target component as displayed on the mobile terminal according to an embodiment of the invention. As shown in FIG. 8, the user may choose the target component corresponding to the monitor target connected to the PLC 42 from the target component list based on the status of the monitor target currently connected to the PLC 42. For example, when the PLC 42 is connected with the lamp 431 (referring to FIG. 4), which is one of the monitor targets, the target component belonging to a "lamp" (referring to FIG. 7) category may be chosen by clicking "lamp" in the component list displayed on the screen of the mobile terminal 41. Referring to FIG. 8, after the target component of the "Lamp" category is selected, the icon 801 of the target component is displayed on the screen of the mobile terminal 41.

The user may further edit the property information of the target component by inputting a specific gesture.

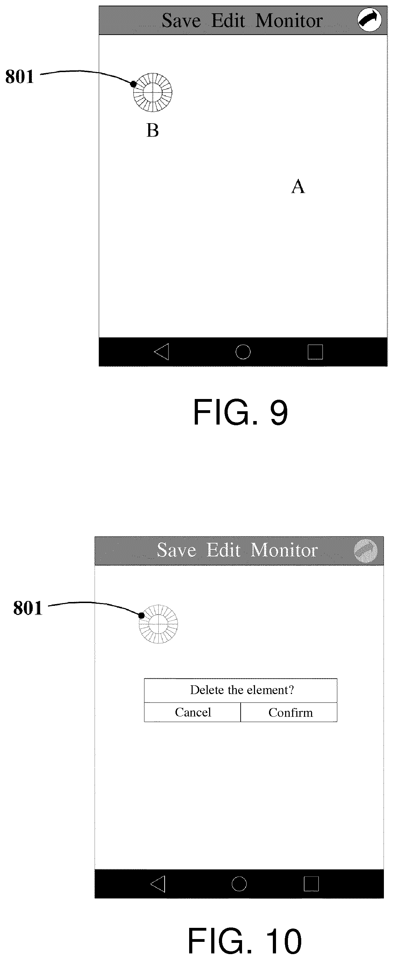

FIG. 9 is a schematic view illustrating dragging a target component as displayed on the mobile terminal according to an embodiment of the invention. For example, as shown in FIG. 9, by clicking and choosing the icon 801 of the target component "lamp" located at position A, the target component may be dragged to a designated position B on the screen.

FIG. 10 is a schematic view illustrating deleting a target component as displayed on the mobile terminal according to an embodiment of the invention. As shown in FIG. 10, by choosing and long pressing the icon 801 of the target component "lamp", the component may be selected whether to be deleted according to the dialogue box displayed on the screen.

Accordingly, based on practical needs and personal preference, the user may edit a monitor frame format, so as to clearly display desired contents on a frame.

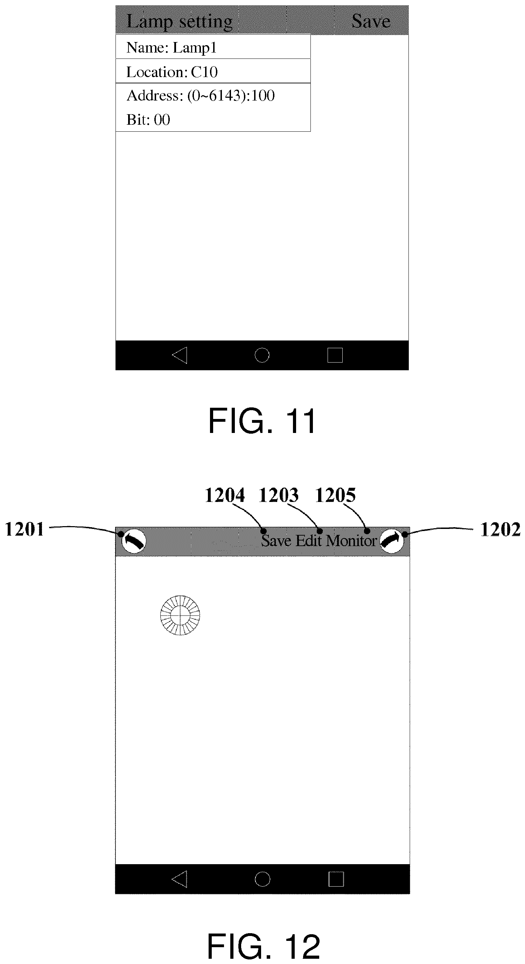

FIG. 11 is a schematic view illustrating editing a target component as displayed on the mobile terminal according to an embodiment of the invention. As shown in FIG. 11, the user may further double click the icon 801 of the target component "lamp" (referring to FIG. 8) to edit information about "lamp". For example, the user may edit a data address of the target component "lamp" based on a data address of the lamp 431 (referring to FIG. 4) (i.e., the monitor target) to associate the target component "lamp" and the lamp 431 as the monitor target.

After the mobile terminal 41 starts monitoring the PLC 42, the mobile terminal 41 receives data of the PLC 42 about the lamp 431 as the monitor target. In addition, the target component "lamp" displays a corresponding status of the lamp 431 as the monitor target based on the received data. For example, when the PLC 42 transmits a signal "ON" to the lamp 431 as the monitor target, the lamp 431 as the monitor target is turned on. At the side of the mobile terminal 41, after receiving the "ON" signal, the icon of the target component "lamp" associated with the lamp 431 as the monitor target is highlighted.

Besides, the user may further edit the signal or the setting value of the target component to control the signal or the setting value of the monitor target corresponding to the target component. For example, based on needs, the user may set a signal status of the target component "switch" to be "ON" or "OFF" or set a signal of the target component "switch" to periodically alternate between "ON" and "OFF". Meanwhile, based on the input information, the mobile terminal 41 transmits a signal for setting the target component "switch" to the PLC 42. Based on the signal, the PLC 42 sets a signal of the PLC 42 for the switch 432 (referring to FIG. 4) as the monitor target. Accordingly, the switch 432 as the monitor target may operate based on the input information set by the user.

In the embodiment, the user may further create a plurality of monitor frames and switch between the monitor frames based on practical needs. Besides, the user may also add different components to different monitor frames.

FIG. 12 is a schematic view illustrating a plurality of frames displayed on the mobile terminal according to an embodiment of the invention. As shown in FIG. 12, the monitor frame may be switched by clicking a leftward arrow sign 1201 or a rightward arrow sign 1202 above the monitor frame. After choosing one of the monitor frames, the user may return to an edit mode by clicking an edit button 1203 above the monitor frame. Moreover, different target components may be added to the monitor frame.

Hence, the user may establish one or more monitor frames based on needs. Hence, when a greater number of target components need to be monitored, or the target components need to be categorized and displayed, a monitor frame may be displayed in a clear and comprehensive manner. Furthermore, by clicking a save button 1204 above the monitor frame, the monitor frame set by the user may be saved for further disposal afterwards. By clicking a monitor button 1205, the monitoring module may start monitoring the PLC component based on the setting of the current monitor frame.

It should be noted that, while the monitoring method is described above by using "lamp" and "switch" as examples, the invention is not limited thereto. The monitor target may include all of the data in the PLC, including the PLC input and/or output data and/or the intermediate data. In addition, the intermediate data may include the value in the data storage region, the value in the working region, the value of the counter, the status value of the PLC, and/or the like. The user may determine a specific monitor target based on an actual situation.

According to the method of the embodiment, by installing the monitoring module (e.g., a specialized app) on the mobile terminal, the user is able to monitor different types of the PLC. Moreover, the user is further offered with the flexibility of setting the monitor page and choosing the target component requiring monitoring based on the actual situation. Meanwhile, the user is not only able to monitor the data of the PLC about the monitor target, but also transmit the control signal to the PLC for the PLC to control the monitor target based on the control signal. Hence, the user's operation becomes more flexible, and the working efficiency and the user experience are also facilitated.

### Embodiment 2

The embodiment provides a monitoring module for monitoring a programmable logic controller (PLC). In addition, the PLC is connected with one or more monitor targets, and the module is disposed in the mobile terminal.

In the embodiment, the monitoring module (also referred to an apparatus or a virtual apparatus) may be an application operated in a cell phone based on the Android system (also referred to as an Android app) or an application operated in a mobile operating system developed by Apple Inc. (also referred to as IOS app). Nevertheless, the invention is not limited thereto. The module may also be an app operated in other mobile terminals based on other operating systems.

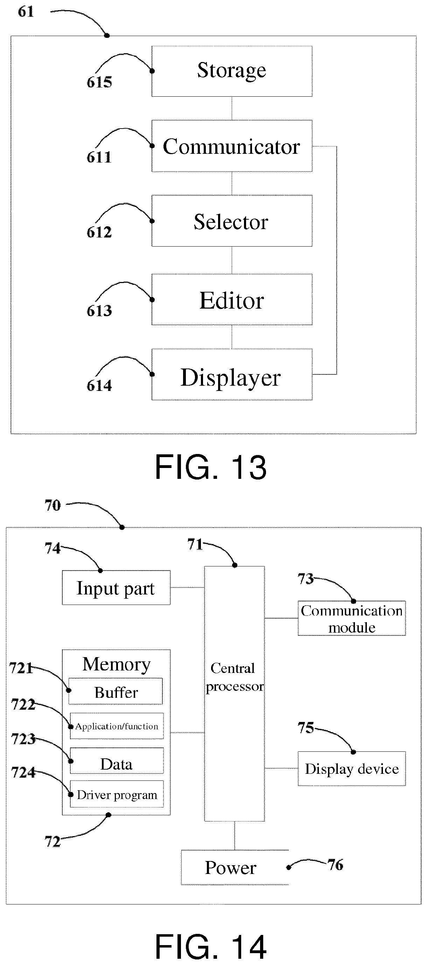

FIG. 13 is a schematic view illustrating a monitoring module for monitoring a programmable logic controller. As shown in FIG. 13, a monitoring module 61 includes a communicator 611, a selector 612, an editor 613, and a displayer 614.

The communicator 611 is connected with the PLC and receives the data about the monitor target transmitted by the PLC. The selector 612 determines the corresponding target component based on the selection information input by the user for selecting the target component for the monitor target from the target component list. The editor 613 associates the target component with the corresponding monitor target based on the first input information input by the user. The displayer 614 makes the target component display the status of the monitor target based on the data received by the communicator 611.

With the mobile terminal of the embodiment, the user is able to flexibly choose the target component based on the actual situation. Thus, the operation of the user becomes more flexible, and the working efficiency and user experience are facilitated.

In the embodiment, the communicator 611 transmits the control command to the PLC based on the second input information input by the user for the target component. Accordingly, the PLC may exert control on the corresponding monitor target based on the second input information. Accordingly, through the mobile terminal, the user is not only able to monitor the status of each PLC component, but is also able to flexibly set the signal or setting value of the PLC for the each PLC component based on the actual situation. Hence, the management and maintenance efficiency is facilitated, and the working efficiency is also increased.

In the embodiment, as shown in FIG. 13, the monitoring module 61 may further include a storage 615 storing the monitor component list in advance. Hence, the user may freely choose the PLC target component to be monitored based on the monitor target connected to the PLC. Accordingly, the user is able to choose a suitable type of target component from a variety of components and is also able to monitor a plurality of types of PLCs to make the operation more flexible.

In the embodiment, the displayer 614 may create one or more pages based on the third input information input by the user. In addition, on each of the pages, the selector 612 may determine the target component based on the target component selection information input by the user. Hence, in a case when a greater number of target components need to be monitored, or the target components need to be categorized and displayed, the monitor frame may be displayed in a clear and comprehensive manner.

In the embodiment, the editor 613 may edit the property information of the target component based on the first input information input by the user. Therefore, the user may edit the property information of the target component based on needs and thus associate the target component with the corresponding PLC monitor target. Moreover, as the format of the monitor frame on the displayer 614 can be edited, the desired contents are able to be clearly displayed on a frame.

The embodiment does not intend to limit the form and the implementation of the monitoring module, and it remains within the scope of the invention as long as one or more of the aforementioned functions are achieved. The monitoring module may communicate with the PLC via a generally acceptable communication protocol, thereby monitoring a plurality of mainstream PLCs.

### Embodiment 3

Embodiment 3 of the invention provides a mobile terminal. The mobile terminal includes the monitoring module of Embodiment 2, and may be a cell phone, a tablet computer, or the like. Nevertheless, the invention is not limited thereto.

FIG. 14 is a schematic view illustrating a system configuration of the mobile terminal according to an embodiment of the invention. A mobile terminal 70 may include a central processor 71 and a storage device 72. The storage device 72 is coupled to the central processor 71. It should be noted that the figure is only provided herein for an illustrative purpose. Other structures may be adopted to supplement or replace the structure and carry out the functions of the structure.

As shown in FIG. 14, the mobile terminal 70 may also include a communication module 73, an input device 74, a display device 75, and a power 76.

The central processor 71 (which is sometimes referred to as a controller or an operating control device and may include a microprocessor, other processing devices, and/or logic devices) receives a user operation and a PLC input, and control respective parts and operations of the mobile terminal 70.

In the embodiment, the storage device 72 may store commands for carrying out various operations. The central processor 71 may be configured to execute the commands to exert control as follows: connecting with the PLC; receiving the selection information input by the user for selecting the target component for the monitor target from the target component list, and determining the target component based on the selection information; associating the target component and the corresponding monitor target based on the first input information input by the user; and receiving the data about the monitor target transmitted by the PLC, wherein the target component displays the status of the monitor target based on the data.

The input device 74 provides a user operation input to the central processor 71. The input device 74 is a key or a touch input device, for example.

The display device 75 is configured to display a display target such as an image, text, a monitor frame, and/or the like. The display device 75 may be a liquid crystal display, for example. However, the invention is not limited thereto.

The storage device 72 may be a static storage device, such as a read-only memory (ROM), a random access memory (RAM), a subscriber identity model (SIM), or the like. The storage device 72 may also be a storage device keeping information even when power is turned off, able to optionally erase data, and configured with more data. An example of such storage device includes an erasable programmable read-only memory (EPROM), for example. The storage device 72 may also be a device of a different type. The storage device 72 may include a buffer storage device 721 (sometimes referred to as a buffer), an application/function storage part 722, a data storage part 723, and a driver program storage part 724.

The application/function storage part 722 is configured to store an application program and a functional program or a procedure of executing an operation of the mobile terminal 70 through the central processor 71. The data storage part 723 is configured to store data, such as data of a saved monitor frame. The driver program storage part 724 stores driver programs. The driver programs are configured for a communication function and/or for carrying out other functions (such as applications of information transmission or address book) of the mobile terminal 70.

The communication module 73 is a transceiver transmitting and receiving signals. The communication module 73 is coupled to the central processor 71 to provide an input signal and receive an output signal.

The embodiment of the invention further provides a computer readable program. When the computer readable program is executed in the mobile terminal, the program allows the computer to execute the monitoring method for monitoring the PLC according to Embodiment 1 in the mobile terminal.

The embodiment of the invention further provides a storage medium storing a computer readable program. The computer readable program allows the computer to execute the monitoring method for monitoring the PLC according to Embodiment 1 in the mobile terminal.

The exemplary embodiments of the invention are described with reference to accompanying drawings. The various features and advantages of the embodiments are clearly described based on the detailed description. Hence, the annexed claims are recited to cover all the features and advantages of the embodiments falling into the spirit and the scope. Besides, it is easy for people skilled in the art to conceive of various modifications and variations. Hence, the disclosure herein does not intend to limit the embodiments of the invention to the exact structures and operations exemplified and described herein, but shall cover all the appropriate modifications and equivalents falling within the scope of the disclosure.

The device and method according to the embodiments of the invention may be implemented by hardware, and may also be implemented by software and hardware combined. The embodiments of the invention relate to a computer readable program. When the program is executed by a logic component, the logic part is able to realize the devices or forming parts described above, or the logic part is able to realize various methods or steps described above. The embodiments of the invention further relate to a storage medium storing the program. The storage medium includes a hard drive, a magnetic disk, an optical disc, a DVD, a flash drive or the like.

## Claims

1. A monitoring method for monitoring a programmable logic controller (42) connected with one or more monitor targets (43), the monitoring method comprising:
connecting (101, 201, 302) a mobile terminal (41, 70) with the programmable logic controller (42);
receiving (102, 202, 303) selection information by the mobile terminal (41, 70), wherein the selection information is input by a user for selecting a target component for the monitor target (43) from a target component list, and determining the target component based on the selection information;
associating (103, 203, 304) the target component and a corresponding monitor target (43) by the mobile terminal (41, 70) based on first input information input by the user; and receiving (104, 206, 305) data about the monitor target (43) by the mobile terminal (41, 70), wherein the data about the monitor target (43) is transmitted by the programmable logic controller (42), and the target component displays (105, 306) a status of the monitor target (43) based on the data.

2. The monitoring method as claimed in claim 1, further comprising:
receiving second input information by the mobile terminal (41, 70), wherein the second input information is input by the user for the target component; and
transmitting (208) a control command to the programmable logic controller (42) based on the second input information, such that the programmable logic controller (42) exerts control on the monitor target (43) based on the second input information.

3. The monitoring method as claimed in claim 1, further comprising:
storing (301) in advance the target component list in the mobile terminal (41, 70).

4. The monitoring method as claimed in claim 1, wherein:
the mobile terminal (41, 70) creates one or more pages based on third input information input by the user, and the mobile terminal (41, 70) determines the target component based on the selection information in each of the pages.

5. The monitoring method as claimed in claim 1, wherein the mobile terminal (41, 70) edits property information of the target component based on the first input information.

6. A monitoring module (61) for monitoring a programmable logic controller (42), wherein the programmable logic controller (42) is connected with one or more monitor targets (43), and the monitoring module (61) is disposed in a mobile terminal (41, 70), the monitoring module (61) comprising:
a communicator (611), connected with the programmable logic controller (42) and receiving data about the monitor target (43) transmitted by the programmable logic controller (42);
a selector (612), determining a target component based on selection information input by a user for selecting the target component for the monitor target (43) from a target component list;
an editor, associating the target component and a corresponding monitor target (43) based on first input information input by the user; and
a displayer (614), making the target component display a status of the monitor target (43) based on the data received by the communicator (611).

7. The monitoring module (61) as claimed in claim 6, wherein the communicator (611) transmits a control command to the programmable logic controller (42) based on second input information input by the user for the target component, such that the programmable logic controller (42) exerts control on the monitor target (43) based on the second input information.

8. The monitoring module (61) as claimed in claim 6, further comprising:
a storage (615), storing in advance the target component list.

9. The monitoring module (61) as claimed in claim 6, wherein the displayer (614) creates one or more pages based on third input information input by the user, and the selector (612) determines the target component based on the selection information in each of the pages.

10. The monitoring module (61) as claimed in claim 6, wherein the editor (613) edits property information of the target component based on the first input information.

11. A mobile terminal (41, 70), comprising the monitoring module (61) as claimed in any one of claims 6-10 for monitoring the programmable logic controller (42).
